(19) Europäisches Patentamt
European Patent Office
Office européen des brevets

(11) EP 1 542 221 B1

(12) EUROPEAN PATENT SPECIFICATION

(45) Date of publication and mention of the grant of the patent:
**10.02.2010 Bulletin 2010/06**

(51) Int Cl.:
***G11B 7/24*** *(2006.01)*

(21) Application number: **04257619.9**

(22) Date of filing: **08.12.2004**

(54) **High speed Optical recording medium**

Optisches Hochgeschwindigkeitsaufzeichnungsmedium

Support d'enregistrement optique à haute vitesse

(84) Designated Contracting States:
**DE FR GB**

(30) Priority: **08.12.2003 JP 2003408522**

(43) Date of publication of application:
**15.06.2005 Bulletin 2005/24**

(73) Proprietor: **FUJIFILM Corporation**
**Minato-ku**
**Tokyo (JP)**

(72) Inventors:
- **Mikoshiba, Hisashi,**
  **Fuji Photo Film Co., Ltd.**
  **Kanagawa (JP)**
- **Shibata, Michihiro,**
  **Fuji Photo Film Co., Ltd.**
  **Kanagawa (JP)**

(74) Representative: **Matthews, Derek Peter**
**Frank B. Dehn & Co.**
**St Bride's House**
**10 Salisbury Square**
**London**
**EC4Y 8JD (GB)**

(56) References cited:
**EP-A- 1 253 148 EP-A- 1 424 691**

- **FRANK F. TANG, GEORGE J. ZHONG, DAVID D. CHEN, BENNO TIEKE AND GEERT R. LANGEREIS: "Recording CD-R up to 56x" PROCEEDINGS OF SPIE VOL. 5060, April 2003 (2003-04), pages 20-23, XP002322266**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 542 221 B1

## Description

### FIELD OF THE INVENTION

This invention relates to a heat mode recording medium capable of writing (recording) or reading (reproducing) information with a high energy density laser beam and a recording method using the same. More particularly, it relates to heat mode recording media such as recordable digital versatile disks (DVD-Rs) suited to writing with visible laser light.

### BACKGROUND OF THE INVENTION

Optical information recording media, namely optical disks, that can be written only once with laser light, which are also called recordable CDs (CD-Rs), are known. Compared with conventional CDs, CD-Rs are advantageous in that they can be supplied at reasonable prices in a short time even on a small production scale and have enjoyed an increasing demand with the recent spread of personal computers. Recording media of CD-R type are typically composed of a transparent disk substrate having a recording layer containing an organic dye, a reflective layer made of metal such as gold, and a protective resin layer stacked thereon in the order described.

Writing on an optical disk is carried out by partly irradiating the recording layer with a laser beam in the near infrared region (usually at wavelengths around 780 nm) to cause the irradiated part of the recording layer to generate heat resulting in deformation. The recorded information is usually read (reproduced) by irradiating with a laser beam having the same wavelength of the write beam and detecting the difference in reflectance between the deformed part (recorded part) and the non-deformed part (non-recorded part) of the recording layer.

In recent years, recording media of higher recording density have been sought for. To increase the recording density it is effective to reduce the beam diameter of writing laser light. It is theoretically known that laser light having a shorter wavelength can be focused into a smaller beam diameter and is therefore favorable for achieving an increased recording density. In this line, optical disks capable of writing and reading with laser light having a wavelength shorter than 780 nm have been developed. DVD-Rs can be mentioned as a type of such optical disks now on the market. DVD-Rs have a structure in which a disk having a transparent substrate of 120 mm or 80 mm in diameter, a recording layer made of a dye, and usually a reflective layer and a protective layer stacked in that order is joined with another disk of the same structure or a protective disk substrate of the same diameter via an adhesive with the recording layer(s) inside. DVD-Rs are writable and readable by irradiating with a visible laser beam usually having a wavelength between 600 nm and 700 nm and achieve higher density recording than CD-Rs.

Since DVD-Rs are capable of recording several times as much information as conventional CD-Rs, they are required to have not only high recording sensitivity but, in particular, a small error ratio in high-speed recording in view of the need to rapidly deal with vast information data. In addition, because the recording layer made of a dye is generally susceptible to deterioration by heat or light with time, development of a recording layer that maintains stable performance against heat or light for an extended period of time has been desired.

JP-A-63-209995 discloses a CD-R type recording medium having a recording layer comprising an oxonol dye on a substrate. The publication alleges that use of the dye makes it possible to maintain stable write/read performance characteristics for a long time. Included in the oxonol dyes disclosed are those having ammonium introduced in the form of an intramolecular salt. JP-A-2000-52658 and JP-A-2002-249674 disclose oxonol dye compounds exhibiting high light fastness and durability and providing an optical recording medium with satisfactory recording characteristics. However, the publications do not mention that the optical recording media containing the oxonol dye exhibit excellent write/read performance at high speeds equivalent to DVD-R's format 8x or higher speed.

One further relevant document is Tang et al, Proceedings of SPIE vol. 5060, April 2003. This document makes reference to a "thermally balanced write strategy invented by Philips Research", however the only media disclosed are discs comprising a phthalocyanine, cyanine or azo dye.

### SUMMARY OF THE INVENTION

The present inventors have investigated the performance of DVD-R type optical recording media containing various oxonoi dye compounds disclosed in the above cited publications. They have found as a result that the media exhibit particularly superior recording characteristics (especially aperture ratio) in high speed recording at an 8x or higher speed as well as sufficient performance in low speed recording at a 1x to about 4x speed. In other words, they have found that the optical recording medium of the present invention shows satisfactory recording performance in 8x or higher speed recording while maintaining satisfactory recording characteristics in low speed recording at a 1x to about 4x speed. A disk recorded at a recording speed as high as 8x or more proved to be markedly superior in data storage stability (light fastness and stability under high humidity, high temperature conditions as archivals) to those recorded at a speed as low as 1x to about 4x.

An object of the invention is to provide an optical recording method which achieves a high reflectance and a high degree of modulation in 8x or higher speed recording while maintaining satisfactory recording characteristics in low speed recording at a 1x to about 4x speed.

Another object of the invention is to provide an optical recording method which has a sufficiently low jitter at a recording speed broadly ranging from 1x to 16x.

To accomplish the above objects of the invention, the present invention provides, in its first aspect, an optical recording method comprising recording an optical recording medium comprising a transparent substrate, a recording layer containing an oxonol dye and a reflective layer with a laser beam having a wavelength of 600 to 700 nm at a linear velocity v (m/sec) with an optimum recording power of at least 25 mW, the optimum recording power being defined to be a recording power (Po) at which a jitter in recording 8/16 modulation signals is lowest and represented by equation:

$$Po = P1 \times \sqrt{(v/3.5)} \sim 1.5P1 \times \sqrt{(v/3.5)}$$

where P1 is an optimum recording power in recording at a linear velocity of 3.5 (m/sec), provided that the oxonol dyes represented by the formulae [0091] and [0104] are excluded:

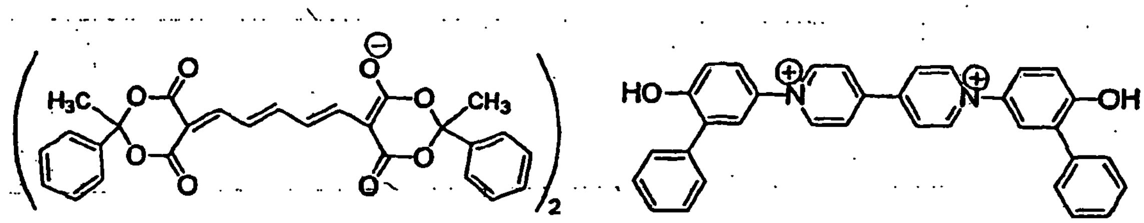

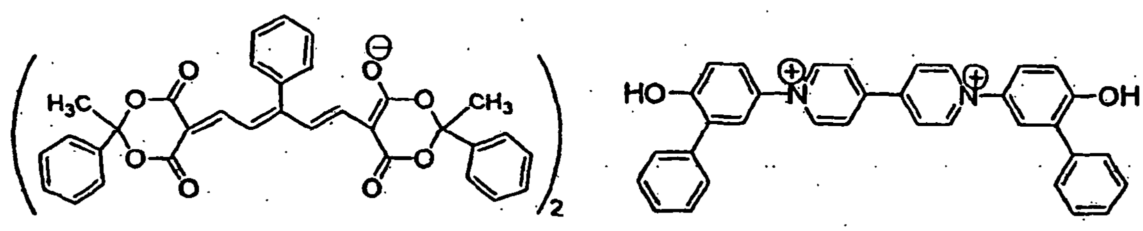

The recording layer preferably contains the oxonol dye in an amount of 50 % by weight or more based on a weight of the recording layer, more preferably contains the oxonol dye in an amount of 80 % by weight or more based on a weight of the recording layer, furthermore preferably contains the oxonol dye in an amount of 90 % by weight or more based on a weight of the recording layer, and still further more preferably contains the oxonol dye in an amount of 95 % by weight or more based on a weight of the recording layer. When the medium is recorded at a linear velocity v (m/sec) with a laser beam having a wavelength of 600 to 700 nm, the optimum recording power is 25 mW or higher (preferably 30 to 60 mW, still preferably 32 to 60 mW).

The organic dye is preferably an oxonol dye represented by formula (I):

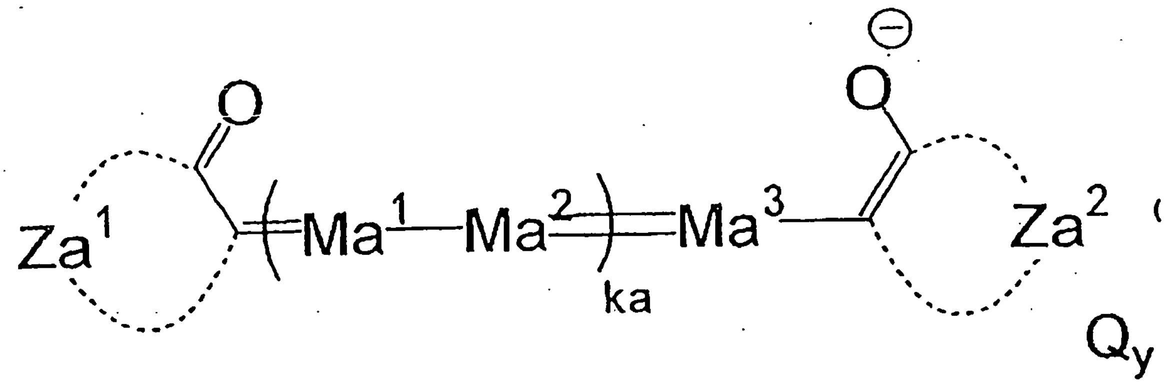

(I)

wherein $Za^1$ and $Za^2$ each represent an atomic group necessary to form an acidic nucleus; $Ma^1$, $Ma^2$, and $Ma^3$ each represent a substituted or unsubstituted methine group; ka represents an integer of 0 to 3; when ka is 2 or 3, $Ma^1$s and $Ma^2$s may be the same or different, respectively; Q represents an ion neutralizing the charge; and y represents a number necessary for neutralization.

The oxonol dye of formula (I) is preferably the one in which the ion represented by Q is represented by formula (II) :

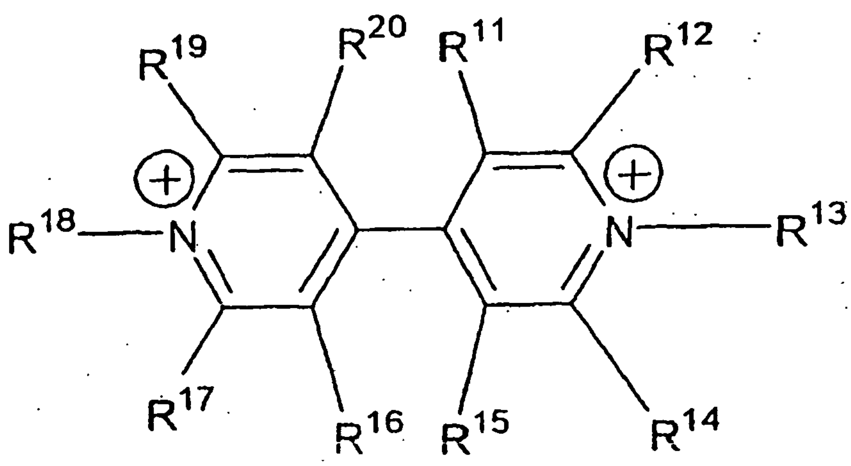

(II)

wherein $R^{11}$, $R^{12}$, $R^{14}$, $R^{15}$, $R^{16}$, $R^{17}$, $R^{19}$, and $R^{20}$ each represent a hydrogen atom or a substituent; and $R^{13}$ and $R^{18}$ each represent a substituent.

The optical recording medium preferably has a first laminate having a transparent disk substrate with a diameter of 120±3 mm or 80±3 mm and a thickness of 0.6+0.1 mm and having a pregroove formed thereon at a track pitch of 0.6 to 0.9 μm and a recording layer containing a dye formed on the pregrooved side of the substrate joined with (a) a second laminate having the same dimension and structure as the first laminate with the recording layer of the first laminate and the recording layer of the second laminate facing each other to have a total thickness of 1.2±0.2 mm or (b) a protective disk substrate with the recording layer facing the protective disk substrate to have a total thickness of 1.2±0.2 mm.

Compared with dyes for low speed recording, the dyes used in the present invention have a large real part n of the complex refractive index with the imaginary part k being equal to or smaller. The optical recording medium provided by the present invention exhibits excellent recording characteristics at low to high speeds.

A particularly excellent performance is exhibited for high-speed recording at 8x or higher speed, and specifically with respect to aperture ratio, by the optical recording media of the invention. In addition, the optical recording media of the invention exhibit desirable recording performance even in high-speed recording at 8x or higher along with maintaining a good recording performance in low-speed recording at about a 1x to about 4x speed.

A disk recorded at a 8x or higher recording speed proved to be markedly superior in the data storage stability (light fastness and stability under humid, high temperature conditions as archivals) to those recorded at a low speed of

a 1x to about 4x. In particular, when a silver alloy is used for the reflective layer, good stability under high humidity, high temperature conditions was achieved. Silver alloys comprising Ag, Nd and Cu are preferred.

DETAILED DESCRIPTION OF THE INVENTION

The organic dye that can be used in the optical recording medium of the invention are oxonol dyes. Examples of useful oxonol dyes are given in F.M. Harmer, Heterocyclic Compounds-Cyanine Dyes and Related Compounds, John & Wiley & Sons, New York, London, 1964.

Of the oxonol dyes preferred are those represented by formula (I):

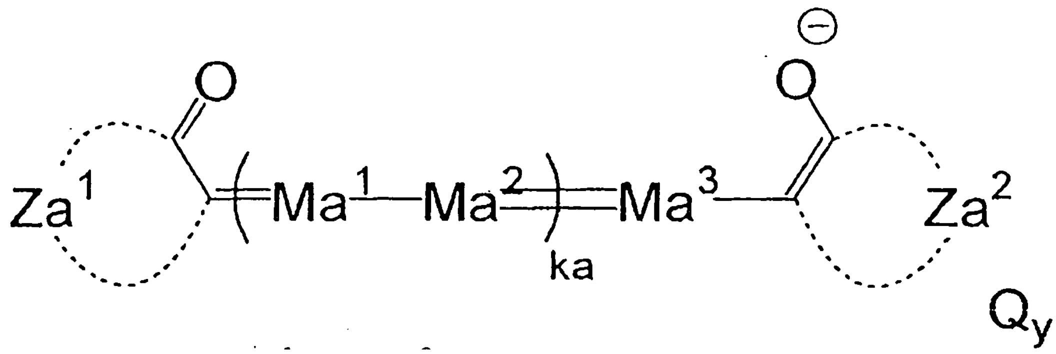

(I)

wherein $Za^1$ and $Za^2$ each represent an atomic group necessary to form an acidic nucleus; $Ma^1$, $Ma^2$, and $Ma^3$ each represent a substituted or unsubstituted methine group; ka represents an integer of 0 to 3; when ka is 2 or 3, $Ma^1$'s and $Ma^2$'s may be the same or different, respectively; Q represents an ion neutralizing the charge; and y represents a number necessary for neutralization.

The atomic group $Za^1$ and $Za^2$ is more specifically defined in James (ed.), The Theory of the Photographic Process, 4th Ed., MacMillan, 1977, 198. Specific examples of the acidic nuclei completed by $Za^1$ or $Za^2$ are pyrazol-5-one, pyrazolidine-3,5-dione, imidazolin-5-one, hydantoin, 2- or 4-thiohydantoin, 2-iminooxazolidin-4-one, 2-oxazolin-5-one, 2-thiooxazoline-2,4-dione, isorhodanine, rhodanine, 5- or 6-membered carbon rings (e.g., indane-1,3-dione), thiophen-3-one, thiophen-3-one 1,1-dioxide, indolin-2-one, indolin-3-one, 2-oxoindazolium, 5,7-dioxo-6,7-dihydrothiazolo [3,2-a]pyrimidine, 3,4-dihydroisoquinolin-4-one, 1,3-dioxane-4,6-dione (e.g., Meldrum's acid), barbituric acid, 2-thiobarbituric acid, coumarin-2,4-dione, indazolin-2-one, pyrido[1,2-a]pyrimidine-1,3-dione, pyrazolo[1,5-b]quinazolone, pyrazolopyridone, and 3-dicyanomethylidenyl-3-phenylpropionitrile. Preferred of them are pyrazol-5-one, barbituric acid, 2-thiobarbituric acid, and 1,3-dioxane-4,6-dione.

The substituents of the substituted methine group represented by $Ma^1$, $Ma^2$ or $Ma^3$ include a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, a substituted or unsubstituted amino group, a sulfo group, a hydroxyl group, a nitro group, a substituted or unsubstituted sulfonylamino group, a substituted or unsubstituted aminocarbonylamino group, a substituted or unsubstituted alkylsulfonyl group, a substituted or unsubstituted arylsulfonyl group, a substituted or unsubstituted sulfinyl group, and a substituted or unsubstituted sulfamoyl group. Preferred of these substituents are a substituted or unsubstituted alkyl group having 1 to 20 carbon atoms, a substituted or unsubstituted heterocyclic group having 2 to 20 carbon atoms, a substituted or unsubstituted alkoxy group having 1 to 20 carbon atoms, a substituted or unsubstituted aryl group having 6 to 20 carbon atoms, and a halogen atom. Still preferred are a substituted or unsubstituted alkyl group having 1 to 10 carbon atoms, a substituted or unsubstituted alkoxy group having 1 to 10 carbon atoms, a substituted or unsubstituted heterocyclic group having 2 to 10 carbon atoms, and a halogen atom. Particularly preferred are an unsubstituted alkyl group having 1 to 5 carbon atoms, an unsubstituted alkoxy group having 1 to 5 carbon atoms, a substituted or unsubstituted heterocyclic group having 2 to 6 carbon atoms, and a halogen atom.

$Ma^1$, $Ma^2$, and $Ma^3$ each preferably represent an unsubstituted methine group or a methine group substituted with an unsubstituted alkyl group having 1 to 5 carbon atoms, an unsubstituted alkoxy group having 1 to 5 carbon atoms, a substituted or unsubstituted heterocyclic group having 2 to 6 carbon atoms or a halogen atom.

ka is preferably 1 or 2. When ka is 2 or greater, $Ma^1$'s and $Ma^2$'s may be the same or different, respectively

As stated above, $Q_y$ means a requisite number of ions for neutralizing the charge. Whether a compound is a cation or an anion or whether or not a compound has a net charge depends on the substituents of the compound. In

formula (I), the ion represented by Q can represent a cation or an anion, which depends on the charge of the counter ion, i.e., the dye molecule. Where the dye molecule is free of charge, there is not Q (ka=0). The ion represented by Q is not particularly limited and includes organic ones and inorganic ones. Q may be monovalent or polyvalent. Cations represented by Q include metal ions , e.g., sodium and potassium ions, and onium ions such as quaternary ammonium, oxonium, sulfonium, phosphonium, selenonium, and iodonium ions. Anions represented by Q include halide ions, e.g., chloride, bromide, and fluoride ions; a sulfate ion; heteropoly-acid ions, e.g., phosphate and hydrogenphosphate ions; organic polyvalent anions, e.g., succinate, maleate, fumarate, and aromatic disulfonate ions; a tetrafluoroborate ion; and a hexafluorophosphate ion.

The cation as Q is preferably an onium ion, still preferably a quaternary ammonium ion, particularly preferably a 4,4'-bipyridinium cation represented by formula (1-4) described in JP-A-2000-52658 or a 4,4'-bipyridinium cation disclosed in JP-A-2002-59652.

Of the oxonol dyes represented by formula (I) preferred are those in which Q is a cation represented by formula (II) :

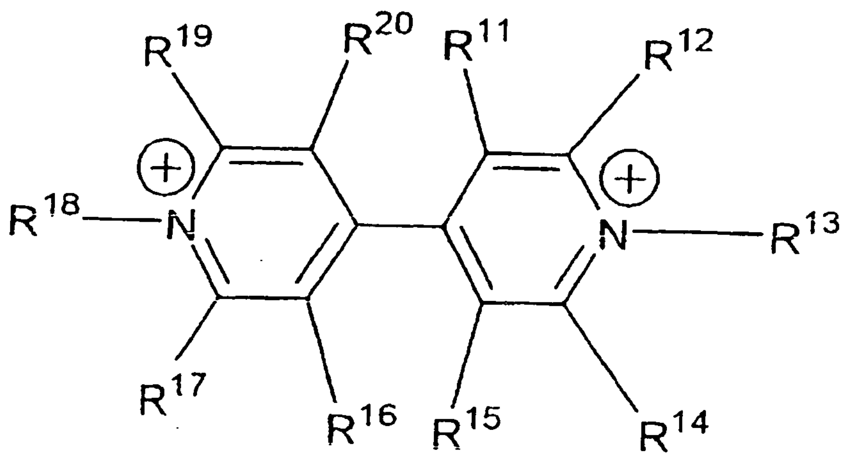

(II)

wherein $R^{11}$, $R^{12}$, $R^{14}$, $R^{15}$, $R^{16}$, $R^{17}$, $R^{19}$, and $R^{20}$ each represent a hydrogen atom or a substituent; and $R^{13}$ and $R^{18}$ each represent a substituent.

The substituents in formula (II) include a halogen atom, an alkyl group including a cycloalkyl group and a bicycloalkyl group, an alkenyl group including a cycloalkenyl group and a bicycloalkenyl group, an alkynyl group, an aryl group, a heterocyclic group, a cyano group, a hydroxyl group, a nitro group, a carboxyl group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group including an anilino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo group, a heterocyclic azo group, an imido group, a phosphino group, a phosphinyl group, a phosphinyloxy group, a phosphinylamino group, and a silyl group.

More specifically, $R^{11}$, $R^{12}$, $R^{14}$, $R^{15}$, $R^{16}$, $R^{17}$, $R^{19}$, and $R^{20}$ each represent (1) a hydrogen atom, (2) halogen atom (e.g., chlorine, bromine or iodine), (3) an alkyl group that is straight, branched or cyclic and substituted or unsubstituted and includes an acyclic one (preferably an acyclic alkyl group having 1 to 30 carbon atoms, e.g., methyl, ethyl, n-propyl, isopropyl, t-butyl, n-octyl, eicosyl, 2-chloroethyl, 2-cyanoethyl or 2-ethylhexyl), a cycloalkyl group (preferably a substituted or unsubstituted cycloalkyl group having 3 to 30 carbon atoms, e.g., cyclohexyl, cyclopentyl or 4-n-dodecylcyclohexyl), a bicycloalkyl group (preferably a substituted or unsubstituted bicycloalkyl group having 5 to 30 carbon atoms, i.e., a monovalent group derived from a bicycloalkane having 5 to 30 carbon atoms by removing one hydrogen atom, e.g., bicyclo[1,2,2]heptan-2-yl or bicyclo[2,2,2]octan-3-yl), and other alkyl groups having three or more cyclic structures such as a tricycloalkyl group (this definition for the term "alkyl group" will hereinafter apply to an alkyl moiety in the substituents hereinafter recited, for example, an alkyl moiety in an alkylthio group), (4) a straight-chain, branched or cyclic and substituted or unsubstituted alkenyl group including an acyclic alkenyl group (preferably a substituted or unsubstituted one having 2 to 30 carbon atoms, e.g., vinyl, allyl, prenyl, geranyl or oleyl), a cycloalkenyl group (preferably a substituted or unsubstituted one having 3 to 30 carbon atoms, i.e., a monovalent group derived from a cycloalkene having 3 to 30 carbon atoms by removing one hydrogen atom, e.g., 2-cyclopenten-1-yl or 2-cyclohexen-1-yl), and a bicycloalkenyl

group, either substituted or unsubstituted (preferably a substituted or unsubstituted one having 5 to 30 carbon atoms, i.e., a monovalent group derived from a bicycloalkene having one double bond by removing one hydrogen atom, e.g., bicyclo[2,2,1]hept-2-en-1-yl or bicyclo[2,2,2]oct-2-en-4-yl), (5) an alkynyl group (preferably a substituted or unsubstituted one having 2 to 30 carbon atoms, e.g., ethynyl, propargyl or trimethylsilylethynyl), (6) an aryl group (preferably a substituted or unsubstituted one having 6 to 30 carbon atoms, e.g., phenyl, p-tolyl, naphthyl, m-chlorophenyl or o-hexadecanoylaminophenyl), (7) a heterocyclic group (preferably a monovalent group derived from a 5- or 6-membered, substituted or unsubstituted, aromatic or non-aromatic heterocyclic compound by removing one hydrogen atoms, still preferably a 5- or 6-membered aromatic heterocyclic group having 3 to 30 carbon atoms, e.g., 2-furyl, 2-thienyl, 2-pyrimidinyl or 2-benzothiazolyl), (8) a cyano group, (9) a hydroxyl group, (10) a nitro group, (11) a carboxyl group , (12) an alkoxy group (preferably a substituted or unsubstituted one having 1 to 30 carbon atoms, e.g., methoxy, ethoxy, i sopropoxy, t-butoxy, n-octyloxy or 2-methoxyethoxy), (13) an aryloxy group (preferably a substituted or unsubstituted one having 6 to 30 carbon atoms, e.g., phenoxy, 2-methylphenoxy, 4-t-butylphenoxy, 3-nitrophenoxy or 2-tetradecanoylaminophenoxy), (14) a silyloxy group (preferably one having 3 to 20 carbon atoms, e.g., trimethylsilyloxy or t-butyldimethylsilyloxy), (15) a heterocyclic oxy group (preferably a substituted or unsubstituted one having 2 to 30 carbon atoms, e.g., 1-phenyltetrazol-5-oxy or 2-tetrahydropyranyloxy), (16) an acyloxy group (preferably a formyloxy group, a substituted or unsubsti tuted alkylcarbonyloxy grouphaving 2 to 30 carbon atoms, e.g., acetyloxy, pivaroyloxy or stearoyloxy, or a substituted or unsubstituted arylcarbonyloxy group having 6 to 30 carbon atoms, e.g., benzoyloxy or p-methoxyphenylcarbonyloxy), (17) a carbamoyloxy group (preferably a substituted or unsubstituted one having 1 to 30 carbon atoms, e.g., N,N-dimethylcarbamoyloxy, N,N-diethylcarbamoyloxy, morpholinocarbonyloxy, N,N-di-n-octylaminocarbonyloxy or N-n-octylcarbamoyloxy), (18) an alkoxycarbonyloxy group (preferably a substituted or unsubstituted one having 2 to 30 carbon atoms, e.g., methoxycarbonyloxy, ethoxycarbonyloxy, t-butoxycarbonyloxy or n-octylcarbonyloxy), (19) an aryloxycarbonyloxy group (preferably a substituted or unsubstituted one having 7 to 30 carbon atoms, e.g., phenoxycarbonyloxy, p-methoxyphenoxycarbonyloxy or p-n-hexadecyloxypenoxycarbonyloxy), (20) an amino group (preferably an unsubstituted amino group, a substituted or unsubstituted alkylamino group having 1 to 30 carbon atoms, e.g., methylamino or dimethylamino, or a substituted or unsubstituted arylamino group having 6 to 30 carbon atoms, e.g., anilino, N-methylanilino or diphenylamino), (21) an acylamino group (preferably a substituted or unsubstituted alkylcarbonylamino group having 2 to 30 carbon atoms, e.g., formylamino, acetylamino, pivaroylamino or lauroylamino, or a substituted or unsubstituted arylcarbonylamino group having 7 to 30 carbon atoms, e.g., benzoylamino or 3,4,5-tri-n-octyloxyphenylcarbonylamino), (22) an aminocarbonylamino group (preferably a substituted or unsubstituted one having 1 to 30 carbon atoms, e.g., carbamoylamino, N,N-dimethylaminocarbonylamino, N,N-diethylaminocarbonylamino or morpholinocarbonylamino), (23) an alkoxycarbonylamino group (preferably a substituted or unsubstituted one having 2 to 30 carbon atoms, e.g., methoxycarbonylamino, ethoxycarbonylamino, t-butoxycarbonylamino, n-octadecyloxycarbonylamino or N-methylmethoxycarbonylamino), (24) an aryloxycarbonylamino group (preferably a substituted or unsubstituted one having 7 to 30 carbon atoms, e.g., phenoxycarbonylamino, p-chlorophenoxycarbonylamino or m-n-octyloxyphenoxycarbonylamino), (25) a sulfamoylamino group (preferably a substituted or unsubstituted one having 0 to 30 carbon atoms, e.g., sulfamoylamino, N,N-dimethylaminosulfonylamino or N-n-octylaminosulfonylamino), (26) an alkylsulfonylamino group (preferably a substituted or unsubstituted one having 1 to 30 carbon atoms, e.g., methylsulfonylamino or butylsulfonylamino), (27) an arylsulfonylamino group (preferably a substituted or unsubstituted arylsulfonylamino group having 6 to 30 carbon atoms, e.g., phenylsulfonylamino, 2,3,5-trichlorophenylsulfonylamino or p-methylphenylsulfonylamino), (28) a mercapto group, (29) an alkylthio group (preferably a substituted or unsubstituted one having 1 to 30 carbon atoms, e.g., methylthio, ethylthio or n-hexadecylthio), (30) an arylthio group (preferably a substituted or unsubstituted one having 6 to 30 carbon atoms, e.g., phenylthio, p-chlorophenylthio or m-methoxyphenylthio), (31) a heterocyclic thio group (preferably a substituted or unsubstituted one having 2 to 30 carbon atoms, e.g., 2-benzothiazolylthio or 1-phenyltetrazol-5-ylthio), (32) a sulfamoyl group (preferably a substituted or unsubstituted one having 0 to 30 carbon atoms, e.g., N-ethylsulfamoyl, N-(3-dodecyloxypropyl)sulfamoyl, N,N-dimethylsulfamoyl, N-acetylsulfamoyl, N-benzoylsulfamoyl or N- (N' -phenylcarbamoyl) sulfamoyl), (33) a sulfo group, (34) an alkylsulfinyl group (preferably a substituted or unsubstituted one having 1 to 30 carbon atoms, e.g., methylsulfinyl or ethylsulfinyl), (35) an arylsulfinyl group (preferably a substituted or unsubstituted one having 6 to 30 carbon atoms, e.g., phenylsulfinyl or p-methylphenylsulfinyl), (36) an alkylsulfonyl group (preferably a substituted or unsubstituted one having 1 to 30 carbon atoms, e.g., methylsulfonyl or ethylsulfonyl), (37) an arylsulfonyl group (preferably a substituted or unsubstituted one having 6 to 30 carbon atoms, e.g., phenylsulfonyl or p-methylphenylsulfonyl), (38) an acyl group (preferably a formyl group, a substituted or unsubstituted alkylcarbonyl group having 2 to 30 carbon atoms, e.g., acetyl, pivaloyl, 2-chloroacetyl or stearoyl, a substituted or unsubstituted arylcarbonyl group having 7 to 30 carbon atoms, e.g., benzoyl or p-n-octyloxyphenylcarbonyl, or a heterocyclic carbonyl group containing 4 to 30 carbon atoms and having a carbonyl group bonded to the carbon atom of a heterocyclic ring, e.g., 2-pyridylcarbonyl or 2-furylcarbonyl), (39) an aryloxycarbonyl group (preferably a substituted or unsubstituted one having 7 to 30 carbon atoms, e.g., phenoxycarbonyl, o-chlorophenoxycarbonyl, m-nitrophenoxycarbonyl or p-t-butylphenoxycarbonyl), (40) an alkoxycarbonyl group (preferably a substituted or unsubstituted alkoxycarbonyl group having 2 to 30 carbon atoms, e.g., methoxycarbonyl, ethoxycarbonyl, t-butoxycarbonyl or

n-octadecyloxycarbonyl), (41) a carbamoyl group (preferably a substituted or unsubstituted one having 1 to 30 carbon atoms, e.g., carbamoyl, N-methylcarbamoyl, N,N-dimethylcarbamoyl, N,N-di-n-octylcarbamoyl or N-(methylsulfonyl) carbamoyl), (42) an arylazo group (preferably a substituted or unsubstituted one having 6 to 30 carbon atoms, e.g., phenylazo or p-chlorophenylazo), (43) a heterocyclic azo group (preferably a substituted or unsubstituted one having 3 to 30 carbon atoms, e.g., 5-ethylthio-1,3,4-thiadiazol-2-ylazo), (44) an imido group (preferably N-succinimido or N-phthalimido), (45) a phosphino group (preferably a substituted or unsubstituted one having 2 to 30 carbon atoms, e.g., dimethylphosphino, diphenylphosphino or methylphenoxyphosphino), (46) a phosphinyl group (preferably a substituted or unsubstituted one having 2 to 30 carbon atoms, e.g., phosphinyl, dioctyloxyphosphinyl or diethoxyphosphinyl), (47) a phosphinyloxy group (preferably a substituted or unsubstituted one having 2 to 30 carbon atoms, e.g., diphenoxyphosphinyloxy or dioctyloxyphosphinyloxy), (48) a phosphinylamino group (preferably a substituted or unsubstituted one having 2 to 30 carbon atoms, e.g., dimethoxyphosphinylamino or dimethylaminophosphinylamino), or (49) a silyl group (preferably a substituted or unsubstituted one having 3 to 30 carbon atoms, e.g., trimethylsilyl, t-butyldimethylsilyl or phenyldimethylsilyl).

Of the above-recited substituents those having a hydrogen atom may have the hydrogen atom displaced with any of the above-recited substituents (≠H). Such substituents include an alkylcarbonylaminosulfonyl group, an arylcarbonylaminosulfonyl group, an alkylsulfonylaminocarbonyl group, and an arylsulfonylaminocarbonyl group, such as methylsulfonylaminocarbonyl, p-methylphenylsulfonylaminocarbonyl, acetylaminosulfonyl, and benzoylaminosulfonyl.

It is preferred that all of $R^{11}$, $R^{12}$, $R^{14}$, $R^{15}$, $R^{16}$, $R^{17}$, $R^{19}$, and $R^{20}$ represent a hydrogen atom. $R^{13}$ and $R^{18}$ each preferably represent a substituted or unsubstituted alkyl group, a substituted or unsubstituted aryl group or a substituted or unsubstituted heterocyclic group. $R^{13}$ and $R^{18}$ each still preferably represent a substituted or unsubstituted aryl group, particularly a substituted aryl group. Apreferredsubstituent of the substituted aryl group represented by $R^{13}$ or $R^{18}$ is a hydroxyl group, a substituted or unsubstituted aryl group, a substituted or unsubstituted alkyl group or a halogen atom.

The most preferred oxonol dyes for use in the present invention are represented by formula (III):

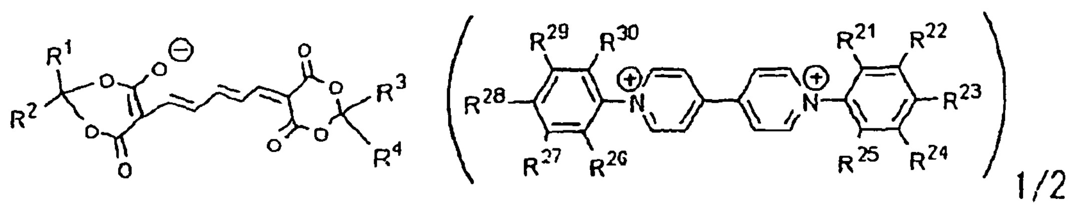

(III)

wherein $R^1$, $R^2$, $R^3$, and $R^4$ each represent a substituted or unsubstituted alkyl group, a substituted or unsubstituted aryl group, or a substituted or unsubstituted heterocyclic group; $R^1$ and $R^2$ may be taken together to form a ring; $R^3$ and $R^4$ may be taken together to form a ring; $R^{21}$, $R^{22}$, $R^{23}$, $R^{24}$, $R^{25}$, $R^{26}$, $R^{27}$, $R^{28}$, $R^{29}$, and $R^{30}$ each represent a hydrogen atom or a substituent; and any adjacent two of $R^{21}$, $R^{22}$, $R^{23}$, $R^{24}$, $R^{25}$, $R^{26}$, $R^{27}$, $R^{28}$, $R^{29}$, and $R^{30}$ may be taken together to form a ring.

In formula (III), the substituent includes those recited above with respect to $R^{11}$, $R^{12}$, $R^{14}$, $R^{15}$, $R^{16}$, $R^{17}$, $R^{19}$, and $R^{20}$ of formula (II) $R^{21}$, $R^{22}$, $R^{23}$, $R^{24}$, $R^{25}$, $R^{26}$, $R^{27}$, $R^{28}$, $R^{29}$, and $R^{30}$ each preferably represent a hydrogen atom, a hydroxyl group, a cyano group, a halogen atom, a substituted or unsubstituted aryl group or a substituted or unsubstituted alkyl group. It is still preferred that $R^{23}$ and $R^{28}$ each represent a hydroxyl group and that $R^{22}$ and $R^{27}$ each represent a substituted or unsubstituted phenyl group. It is particularly preferred that $R^{21}$, $R^{24}$, $R^{25}$, $R^{26}$, $R^{29}$, and $R^{30}$ each represent a hydrogen atom.

Examples of preferred compounds represented by formula (I) are shown below for illustrative purposes only but not for limitation.

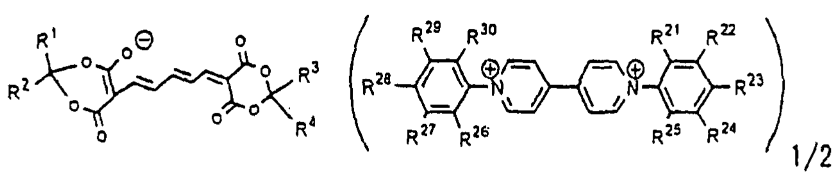

| Compound | R1 | R2 | R3 | R4 | R21 | R22 | R23 | R24 | R25 | R26 | R27 | R28 | R29 | R30 |
|---|---|---|---|---|---|---|---|---|---|---|---|---|---|---|
| 1 | 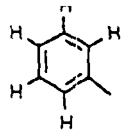 | 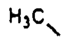 | 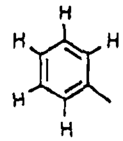 | 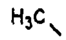 | -H | 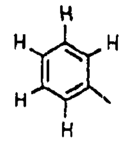 | -OH | -H | -H | -H | 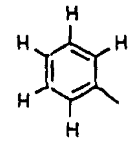 | -OH | -H | -H |
| 2 | 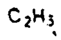 | 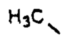 | 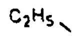 | 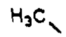 | " | " | " | " | " | " | " | " | " | " |
| 3 | 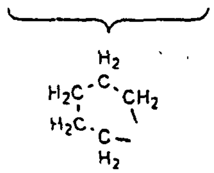 | | 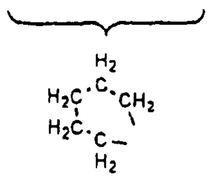 | | " | " | " | " | " | " | " | " | " | " |
| 4 | 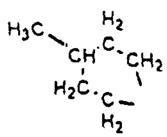 | | 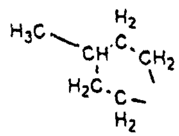 | | " | " | -H | " | " | " | " | " | " | " |
| 5 | 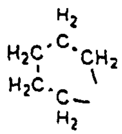 | | 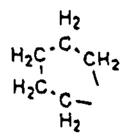 | | -H | 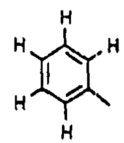 | -H | -H | -OH | -H | 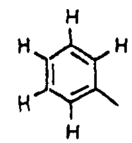 | -H | -H | -OH |
| 6 | " | | " | | -H | 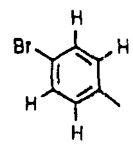 | -H | -H | -OH | -H | 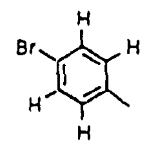 | -H | -H | -OH |

(continued)

| Compound | R1 | R2 | R3 | R4 | R21 | R22 | R23 | R24 | R25 | R26 | R27 | R28 | R29 | R30 |
|---|---|---|---|---|---|---|---|---|---|---|---|---|---|---|
| 7 | 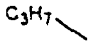 | 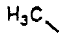 | 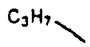 | 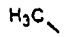 | -H | 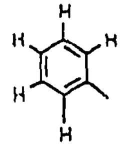 | -OH | -H | -H | -H | 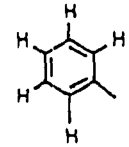 | -OH | -H | -H |
| 8 | 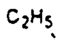 | 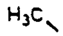 | 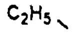 | 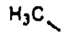 | " | " | " | " | " | " | " | " | " | " |
| 9 | 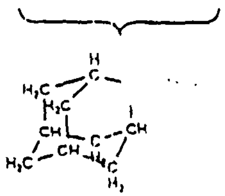 | | 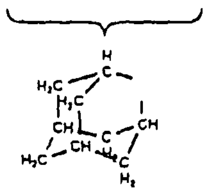 | | " | 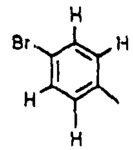 | " | " | " | " | 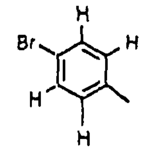 | " | " | " |
| 10 | 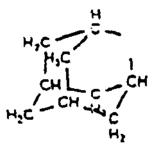 | | 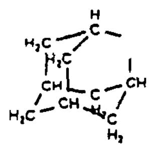 | | -OH | -H | -H | 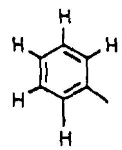 | -H | -OH | -H | -H | 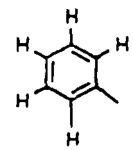 | -H |
| 11 | 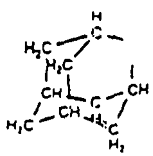 | | 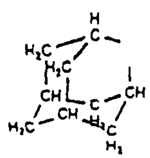 | | -H | 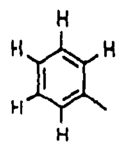 | -H | -H | -OH | -H | 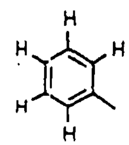 | -H | -H | -OH |

(continued)

| Compound | $R^1$ | $R^2$ | $R^3$ | $R^4$ | $R^{21}$ | $R^{22}$ | $R^{23}$ | $R^{24}$ | $R^{25}$ | $R^{26}$ | $R^{27}$ | $R^{28}$ | $R^{29}$ | $R^{30}$ |
|---|---|---|---|---|---|---|---|---|---|---|---|---|---|---|
| 12 | | " | | " | -H | 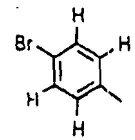 | -H | -H | -OH | -H | 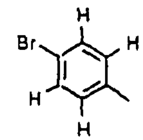 | -H | -H | -OH |

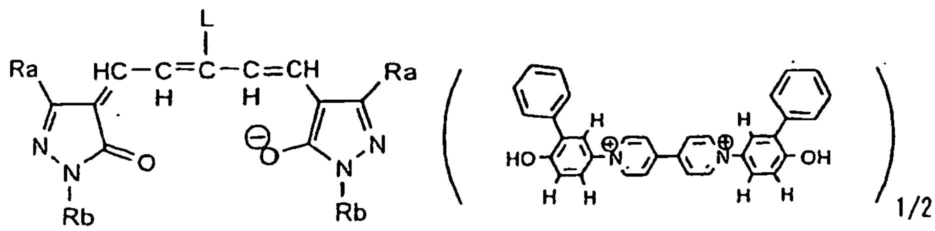

| Dye | Ra | Rb | L |
|---|---|---|---|
| 13 | $-COOC_2H_5$ | -H | -H |
| 14 | $-COOC_2H_5$ | $-CH_3$ | -H |
| 15 | $-COOC_2H_5$ | 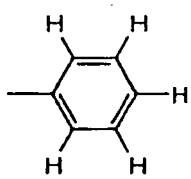 | -H |
| 16 | $-CONHCH_3$ | $-C_2H_5$ | 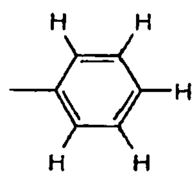 |

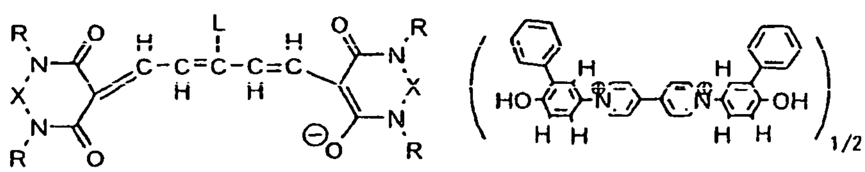

| Dye | R | X | L |
|---|---|---|---|
| 17 | $-C_2H_5$ | 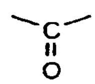 | -H |
| 18 | $-C_3H_7$ | 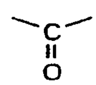 | -H |
| 19 | 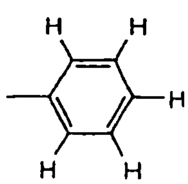 | 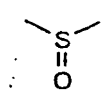 | -H |

(continued)

| Dye | R | X | L |
|---|---|---|---|
| 20 | 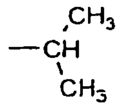 | 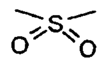 | -H |
| 21 | $-C_4H_9$ | 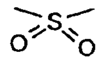 | $-CH_3$ |

22

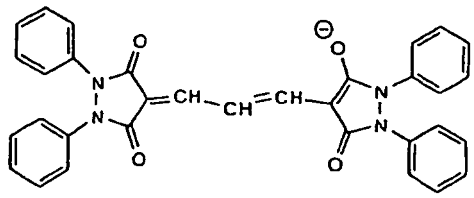

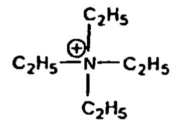

23

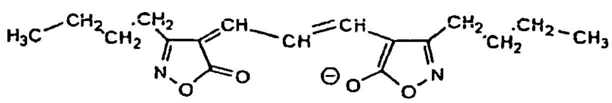

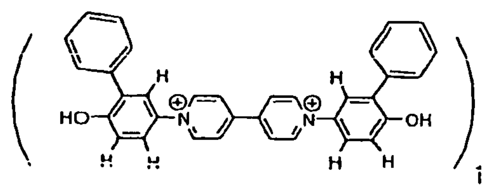

1/2

24

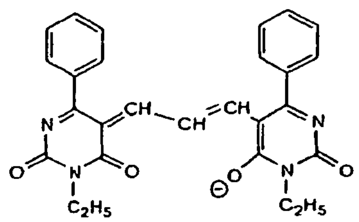

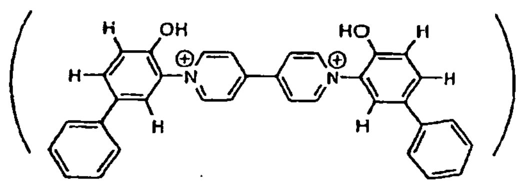

1/2

25

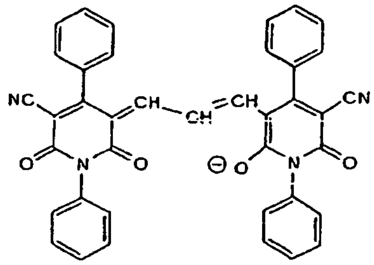

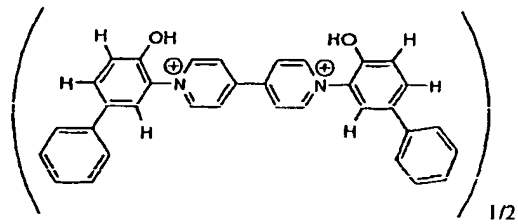

26

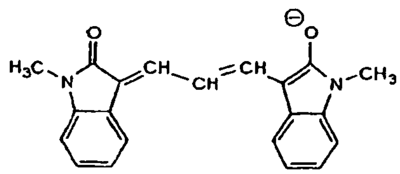

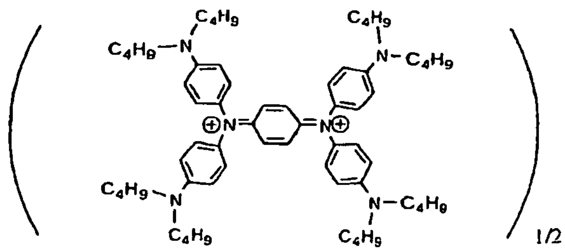

27

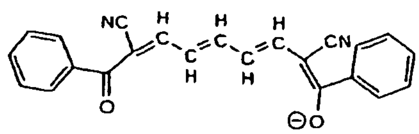

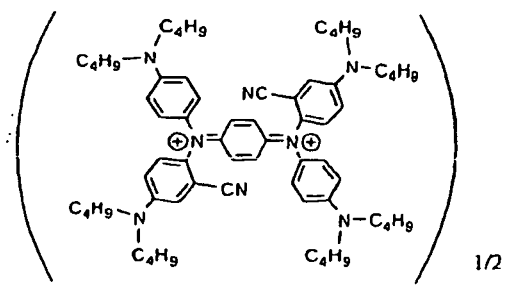

28

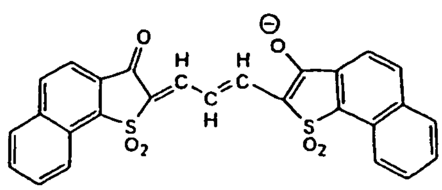

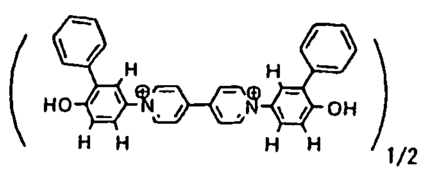

29

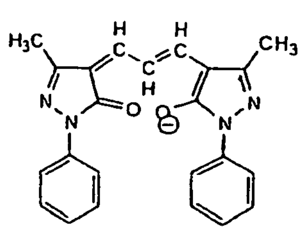

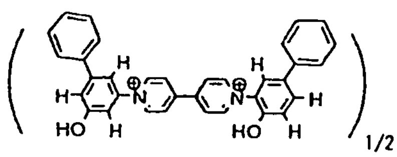

30

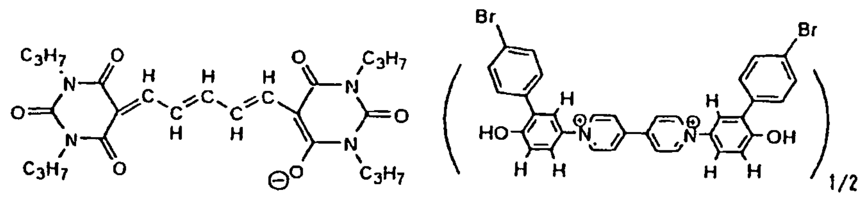

31

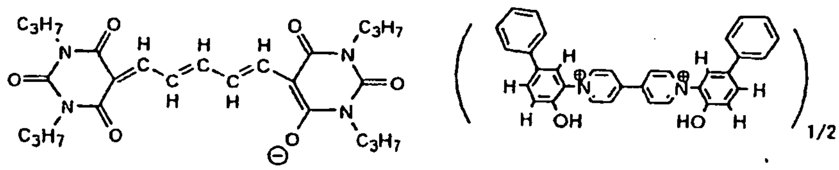

32

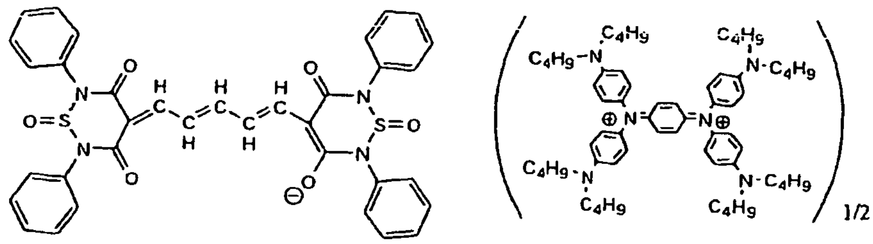

33

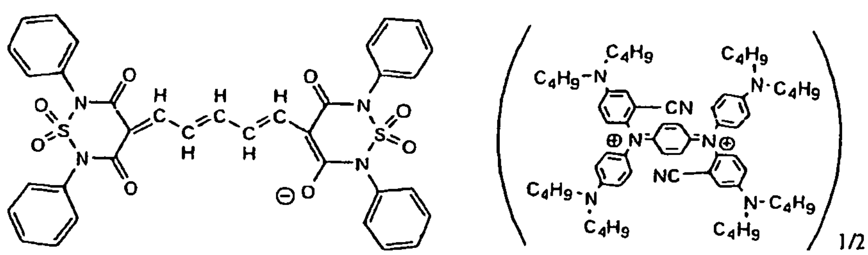

34

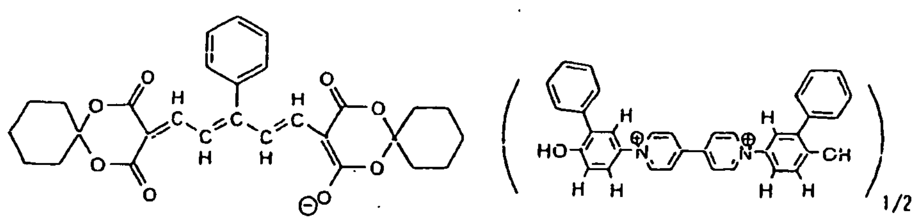

General oxonol dyes are synthesized by condensation between a corresponding active methylene compound and a methine source (a compound supplying a methine group). For the details of these kinds of reactant compounds, reference can be made in JP-B-39-22069, JP-B-43-3504, JP-B-52-38056, JP-B-54-38129, JP-B-55-10059, JP-B-58-35544, JP-A-49-99620, JP-A-52-92716, JP-A-59-16834, JP-A-63-316853, JP-A-64-40827, British Patent 1133986, and U.S. Patents 3,247,127, 4,042,397, 4,181,225, 5,213,956, and 5,260179. These compounds are also described in JP-A-63-209995, JP-A-10-309871, and JP-A-2002-249674.

A so-called dye recycle is possible which comprises recovering the oxonol dye, which spattered around during spin coating in the form of solution or dye, and again dissolving the recovered dye for the preparation of a coating

solution. In such operations, it is preferred to use an HPLC or spectrometer for the purpose of dye concentration matching.

The dye compounds represented by formula (I) (inclusive of formula (III)) can be used either individually or as a combination of two or more thereof or a combination with one or more of other dye compounds. The dyes that can be used in combination with the compounds of formula (I) include azo dyes (including metal complexes), pyromethene dyes, and cyanine dyes.

The dyes used in the invention preferably have a thermal decomposition temperature ranging from 100˚ to 350˚C, still preferably 150˚ to 300˚C, particularly preferably 200˚ to 300˚C. The dyes used in the invention preferably have such optical characteristics when formed into an amorphous film that the real part n (refractive index) and the imaginary part k (extinction coefficient) of the complex refractive index fall within the following ranges: $2.0 \leq n \leq 3.0$ and $0.005 \leq k \leq 0.30$, still preferably $2.1 \leq n \leq 2.7$ and $0.01 \leq k \leq 0.15$, particularly preferably $2.15 \leq n \leq 2.50$ and $0.03 \leq k \leq 0.10$.

The optical recording medium of the invention is not particularly limited in structure as long as it contains an oxonol dye (preferably the dye compound of formula (I)) and has a specific optimum recording power under the specified recording conditions. The recording medium of the invention preferably has at least a recording layer containing the organic dye and a reflective layer stacked in this order on a substrate.

For applications to a CD-R format, the optical recording medium of the invention preferably has a recording layer containing the dye compound of formula (I) (preferably formula (III)), a reflective layer, and a protective layer stacked in this order on a transparent disk substrate having a thickness of 1.2±0.2 mm and a pregroove at a track pitch of 1.4 to 1.8 μm. Where applied to a DVD-R format, the optical recording medium preferably has either of the following two structures.

(a) A structure having a pair of laminates each comprising a transparent disk substrate having a thickness of 0.6±0.1 mm and having a pregroove formed thereon at a track pitch of 0.6 to 0.9 μm, a recording layer containing the dye compound of formula (I) formed on the pregrooved side of the substrate, and a reflective layer formed on the recording layer, the two laminates being joined with their recording layers facing inside to have a total thickness of 1.2±0.2 mm.

(b) A structure having a laminate comprising a transparent disk substrate having a thickness of 0.6±0.1 mm and having a pregroove formed thereon at a track pitch of 0.6 to 0.9 μm, a recording layer containing the dye compound of formula (I) formed on the pregrooved side of the substrate, and a reflective layer formed on the recording layer and a protective substrate having the same dimension as the laminate, the laminate and the protective substrate being joined with the recording layer facing the protective substrate to have a total thickness of 1.2±0.2 mm.

The optical recording medium of the invention is suited for use on an 8x or higher speed write/read drive, preferably a 10x or higher speed, still preferably a 12x or higher speed, particularly preferably a 16x or higher speed, write/read drive. The data transmission speed is preferably 80 Mbps or higher, still preferably 110 Mbps or higher, particularly preferably 130 Mbps or higher, especially preferably 170 Mbps or higher.

The recording medium of the invention can be produced using the following materials and methods.

The material of the substrate (including the protective substrate) is chosen arbitrarily from various materials conventionally used as a substrate of information recording media, such as glass, polycarbonateresins, acrylic resins (e.g., polymethyl methacrylate), vinyl chloride resins (e.g., polyvinyl chloride and vinyl chloride copolymers), epoxy resins, amorphous polyolefins, and polyester resins. If desired, two or more of them may be used in combination. These materials can be used in the form of a film or a rigid sheet. Polycarbonate resins are preferred of them in view of their moisture resistance, dimensional stability, and low cost.

A primer coat may be provided on the substrate on which a recording layer is to be formed for improving the flatness and adhesion and for preventing denaturation of the recording layer. The primer includes polymers such as polymethyl methacrylate, acrylic acid-methacrylic acid copolymers, styrene-maleic anhydride copolymers, polyvinyl alcohol, N-methylolacrylamide, styrene-vinyltoluene copolymers, chlorosulfonated polyethylene, nitrocellulose, polyvinyl chloride, chlorinated polyolefins, polyesters, polyimides, vinyl acetate-vinyl chloride copolymers, ethylene-vinyl acetate copolymers, polyethylene, polypropylene, and polycarbonates; and surface modifiers such as silane coupling agents. The primer coat is formed by dissolving or dispersing the primer in an appropriate medium and applying the coating solution or dispersion to the substrate by spin coating, dip coating, extrusion coating, and the like techniques.

The substrate (or the substrate and the primer coat) has a pregroove spirally formed thereon at the aforementioned pitch for tracking control or address detection. The pregrooved substrate is preferably produced by molding a resin material such as polycarbonate by injection molding or extrusion. The pregrooved substrate may be obtained by forming a pregroove layer on the substrate as follows. A curing composition containing at least one monomer selected from acrylic acid mono- , di-, tri- or tetraesters (or their oligomers) and a photopolymerization initiator is applied to a precise stamper.

The substrate is placed on the applied layer, and the curing composition is irradiated with ultraviolet light through the stamper or the substrate to cure and adhere to the substrate.

The substrate with the thus formed pregroove layer is removed from the stamper.

A recording layer containing the oxonol dye, preferably the dye compound of formula (I), is applied to the pregrooved side of the substrate (or the primer coat). The recording layer can contain various discoloration inhibitors for improving the light fastness. Typical discoloration inhibitors include the metal complexes, diimmonium salts, and aminium salts represented by formulae (III), (IV) and (V), respectively, described in JP-A-3-224793, the nitroso compounds disclosed in JP-A-2-300287 and JP-A-2-300288, and the TCNQ derivatives taught in JP-A-10-151861.

The recording layer is formed by dissolving the dye and, if necessary a discoloration inhibitor, a binder, etc. in an appropriate solvent to prepare a coating composition, applying the coating composition to the pregrooved side of the substrate, followed by drying. The solvent of the coating composition includes esters such as butyl acetate, ethyl acetate, and cellosolve acetate; ketones, such as methyl ethyl ketone, cyclohexanone, and methyl isobutyl ketone; chlorinated hydrocarbons, such as dichloromethane,1,2-dichloroethane, and chloroform; amides, such as dimethylformamide; hydrocarbons, such as cyclohexane; ethers, such as tetrahydrofuran, ethyl ether, and dioxane; alcohols, such as ethanol, n-propanol, isopropyl alcohol, n-butanol, diacetone alcohol; fluorine-containing solvents, such as 2,2,3,3-tetrafluoropropanol; and glycol ethers, such as ethylene glycol monomethyl ether, ethylene glycol monoethyl ether, and propylene glycol monomethyl ether. One or more solvents are selected taking the solubility of the solute compounds into consideration. The coating composition may contain other additives, such as antioxidants, UV absorbers, plasticizers, and lubricants, according to necessity.

The binder that can be used in the coating composition include naturally occurring organic polymers, such as gelatin, cellulose derivatives, dextran, rosin, and natural rubber; and synthetic organic polymers, such as hydrocarbon resins (e.g., polyethylene, polypropylene, polystyrene, and polyisobutylene), vinyl resins (e.g., polyvinyl chloride, polyvinylidene chloride, and vinyl chloride-vinyl acetate copolymers), acrylic resins (e.g., polymethyl acrylate and polymethyl methacrylate), polyvinyl alcohol, chlorinated polyethylene, epoxy resins, butyral resins, rubber derivatives, and an initial condensate of a thermosetting resin, such as a phenol-formaldehyde resin. The binder, when used, is usually used in an amount 0.01 to 50 times, preferably 0.1 to 5 times, the weight of the dye. The dye concentration in the coating composition usually ranges 0.01% to 10% by weight, preferably 0.1% to 5% by weight.

The coating composition is applied by spraying, spin coating, dipping, roll coating, blade coating, doctor roll coating, screen printing, or like techniques. The recording layer may have a single- or multi-layer structure. The recording layer generally has a thickness of 20 to 500 nm, preferably 50 to 300 nm.

A reflective layer is provided on the recording layer for increasing the reflectance in reading the recorded information. Light reflective materials showing a high reflectance to laser light are used, including metals or semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; and stainless steel. Preferred of them are Cr, Ni, Pt, Cu, Ag, Au, Al, and stainless steel, with Ag being particularly preferred. The above recited materials can be used either individually or as a mixture or an alloy of two or more thereof. The reflective layer can be formed by vacuum evaporation, sputtering or ion plating. The reflective layer usually has a thickness of 10 to 300 nm, preferably 50 to 200 nm.

Aprotective layer may be provided on the reflective layer for the purpose of physically and chemically protecting the recording layer. A protective layer may also be provided on the other side of the substrate to provide protection against scratches and moisture. Materials for the protective layer include inorganic substances, such as SiO, $SiO_2$, $MgF_2$, $SnO_2$, and $Si_3N_4$; and organic substances, such as thermoplastic resins, thermosetting resins, and UV curing resins. The protective layer can be formed by, for example, laminating the reflective layer and/or the substrate with an extruded resin film via an adhesive layer. The protective layer may also be formed by vacuum evaporation or sputtering. The protective layer of a thermoplastic resin or a thermosetting resin may be formed by applying a solution of the resin in an appropriate solvent followed by drying. The protective layer of a UV curing resin can be formed by applying the resin either as such or as dissolved in an appropriate solvent, followed by UV irradiation to cure the resin. The coating composition for the protective layer can contain additives such as antistatics, antioxidants, and UV absorbers according to the purpose. The protective layer usually has a thickness of 0.1 to 100 $\mu$m.

There is thus obtained a laminate having the recording layer, the reflective layer, and, if desired, the protective layer on the substrate. The resulting laminate is bonded to another laminate via an adhesive wi th the recording layers inside to produce a DVD-R format recording medium having two recording layers. Or the resulting laminate is bonded to a protective disk substrate having the same dimension as the substrate of the laminate (called a dummy disk) via an adhesive with the recording layer inside to produce a single-sided DVD-R format recording medium having a single recording layer.

The method of recording information according to the present invention is carried out using the optical recording medium of the present invention, for example, as follows. The recording medium is rotated at a constant linear velocity or a constant angular velocity on a drive and irradiated with a write laser beam (e.g., a semiconductor laser beam) from the side of the substrate. It is believed that the irradiation causes any change, such as deformation of the recording layer and/or the reflective layer to create a void in the interface between the recording layer and the reflective layer, deformation of the substrate to form a bulge or a change in color or association state of the recording layer, whereby information is recorded as a change of refractive index of the recording layer. Light used for writing includes a semiconductor laser beam having an oscillation wavelength ranging from 770 nm to 790 nm for CD-Rs and from 600 nm to 700 nm (preferably 620 to 680 nm, still preferably 630 to 660 nm) for DVD-Rs. The recorded information is read by irradiating the medium rotating at the same speed as for writing with a semiconductor laser beam having the same wavelength as used for writing from the substrate side and detecting the reflected light.

EXAMPLES

The present invention will now be illustrated in greater detail with reference to Examples, but it should be understood that the invention is not deemed to be limited thereto.

EXAMPLE 1 AND COMPARATIVE EXAMPLE 1

A polycarbonate resin was injection molded to make a 0.6 mm-thick and 120 mm-diameter disk substrate having a 310 nm-wide and 130 nm-deep spiral pregroove at a track pitch of 0.74 μm.

A solution of 1.25 g of compound No. 3 according to the present invention in 100 ml of 2,2,3,3-tetrafluoropropanol was applied to the pregrooved side of the substrate by spin coating to form a recording layer. Silver was deposi ted on the recording layer by sputtering to form a reflective layer having a thickness of 150 nm. A 0. 6 mm-thick and 120 mm-diameter dummy substrate was joined to the reflective layer using a UV curing resin (Daicure Clear SD640 available from Dainippon Ink & Chemicals, Inc. ) as an adhesive to produce a single-sided recording medium.

A comparative recording medium was prepared in the same manner as described above, except for using comparative compound (1) shown below in place of compound No. 3.

Comparative compound (1):

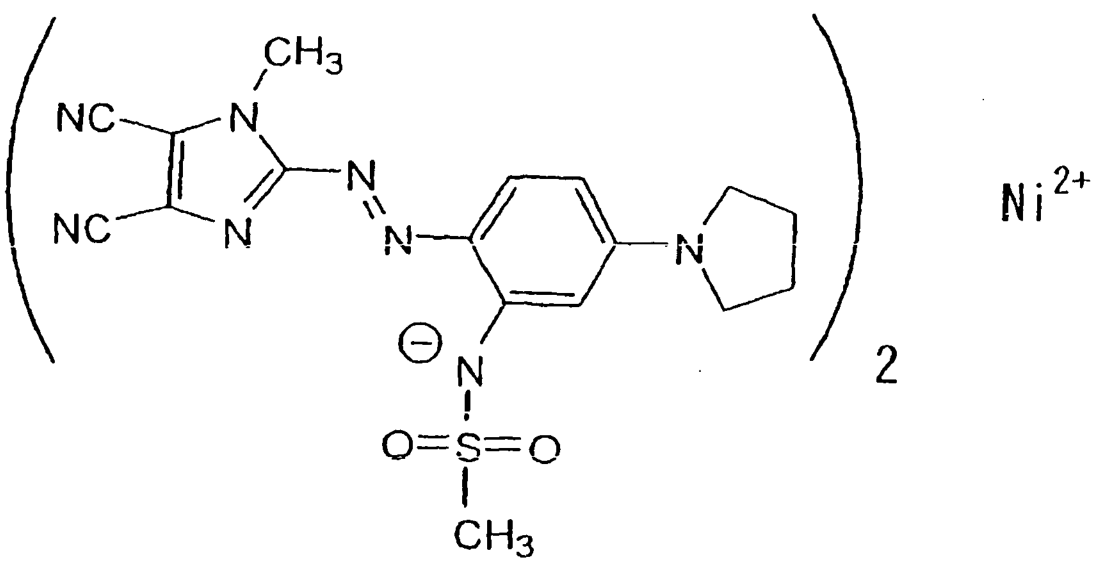

Eight-sixteen modulation signals were recorded on the resulting recording medium using an optical disk evaluation system (DUD 1000 and Multi Signal Generator, supplied by Pulstec Industrial Co., Ltd.; laser wavelength: 660 nm; NA: 0.60) at a constant linear velocity varied from 3.5 m/sec (standard linear velocity of DVD-Rs) to 35 m/sec. The write strategy data used in the experiment are shown in Table 1 below.

TABLE 1

| Write Speed | 1x | 8x | 8x | 10x |
|---|---|---|---|---|
| Write Strategy | A | B | C | D |
| 3T top | 1.55 | 2.55 | 1.85 | 2.75 |

(continued)

| Write Speed | 1x | 8x | 8x | 10x |
|---|---|---|---|---|
| 4T top | 1.50 | 2.92 | 2.12 | 3.20 |
| nT top | 1.55 | 1.70 | 1.30 | 1.90 |
| T mp | 0.65 | - | - | - |
| nT wt | - | 0.50 | -0.30 | 0.55 |
| nT lp | - | 1.40 | 0.60 | 1.40 |
| 3-nT ld | - | -0.03 | -0.05 | -0.03 |
| 3T dtop | - | -0.15 | -0.05 | -0.15 |
| 4T dtop | - | 0.20 | 0.35 | 0.20 |
| nT dtop | - | 0.00 | 0.00 | 0.00 |
| 5T top2 | - | -0.15 | -0.05 | -0.20 |
| 5T tlp2 | - | -0.10 | -0.15 | -0.20 |
| 5T dlp2 | - | 0.00 | 0.00 | 0.00 |
| Po/Pm | - | 1.48 | 1.58 | 1.36 |

Write strategy A:

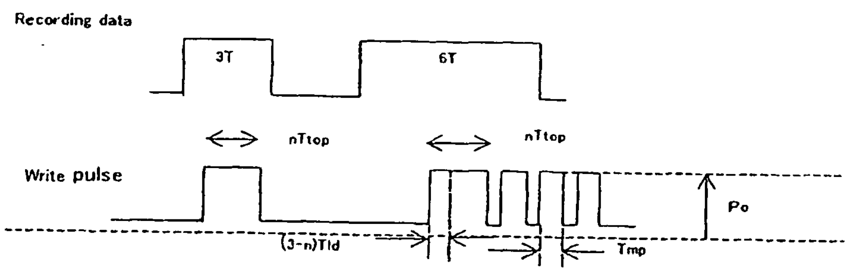


Write strategy B, C, D:

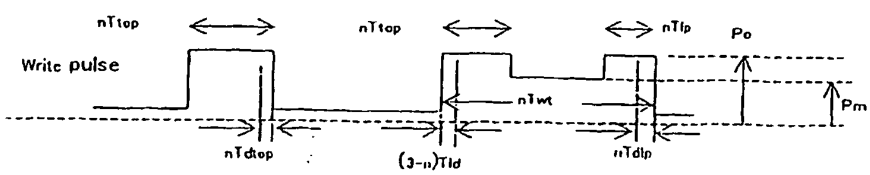


The results of the optimum recording power and jitter measurements are shown in Table 2 below.

TABLE 2

| | Example 1 | | | Comparative Example 1 | | |
|---|---|---|---|---|---|---|
| Linear Velocity (m/sec) | 3.5 | 28.0 | 35.0 | 3.5 | 28.0 | 35.0 |
| Write Strategy | A | B | D | A | B | D |
| Recording Power (mW) | 12.0 | 34.7 | 39.0 | 8.5 | 26.0 | 33.0 |
| Reflectance (%) | 49 | 49 | 49 | 52 | 52 | 52 |
| Jitter (%) | 7.9 | 7.8 | 8.0 | 8.1 | 13.0 | 14.0 |
| 14T Modulation Degree | 0.52 | 0.72 | 0.77 | 0.63 | 0.66 | 0.67 |

The recording medium of Example 1 has a low litter and a high reflectance at any of 1x, 8x and 10x speeds, whereas the recording medium of Comparative Example 1 shows steep deterioration in aperture ratio (AP) and jitter in high speed recording at 8x or 10x. Furthermore, the optimum recording power in Example 1 was 34.7 mW in the write strategy B, while in Comparative Example 1, the jitter was lowest near the write strategyA, which implies that the optimum recording power would be 8.6 mW or lower.

EXAMPLE 2

Optical recording disks 202 to 211 were produced in the same manner as in Example 1, except for replacing dye compound No. 3 with each of dye compound Nos. 4, 5, 7, 10, 13, 19, 20, 27, 32, and a combination of compound Nos. 3 and 34. The resulting disks were evaluated in the same manner as in Example 1. As a result, all the disks exhibited excellent write/read performance in a full range of speed of from 1x to 10x. Of the results of evaluation those at a linear velocity of 35.0 m/sec (10x) are shown in Table 3 below. The results of the disks of Example 1 (Sample 201) and Comparative Example 1 (Sample 212) are also shown. It is seen that the dye compounds used in the invention exhibit high reflectances, low jitters, and sufficient degrees of modulation.

TABLE 3

| Sample No. | Compound No. | Reflectance (%) | Jitter (%) | 14T Modulation Degree | Remark |
|---|---|---|---|---|---|
| 201 | 3 | 49 | 8.0 | 0.77 | invention |
| 202 | 4 | 45 | 8.2 | 0.78 | invention |
| 203 | 5 | 46 | 8.1 | 0.77 | invention |
| 204 | 7 | 47 | 7.9 | 0.77 | invention |
| 205 | 10 | 45 | 8.1 | 0.78 | invention |
| 206 | 13 | 46 | 7.8 | 0.77 | invention |
| 207 | 19 | 47 | 7.9 | 0.76 | invention |
| 208 | 20 | 47 | 8.4 | 0.75 | invention |
| 209 | 27 | 48 | 8.3 | 0.76 | invention |
| 210 | 32 | 45 | 8.2 | 0.78 | invention |
| 211 | 3/34 (40/60 by weight) | 46 | 7.5 | 0.78 | invention |
| 212 | comparative compound 1 | 52 | 14.0 | 0.67 | comparison |

In addition, the recording media of Example 2 were used to record 3T and 14T single-frequency signals at 12x and 16x speeds. As a result, the C/N ratio, degree of modulation, and jitter were equal to those obtained in 1x to 10x recording, indicating that the recording media exhibit satisfactory characteristics in recording at as high a speed as 10x to 16x or even in faster recording.

## Claims

1. An optical recording method comprising recording an optical recording medium comprising a transparent substrate, a recording layer containing an oxonol dye and a reflective layer with a laser beam having a wavelength of 600 to 700 nm at a linear velocity v (m/sec) with an optimum recording power of at least 25 mW, the optimum recording power being defined to be a recording power (Po) at which a jitter in recording 8/16 modulation signals is lowest and represented by equation:

$$Po = P1 \times \sqrt{(v/3.5)} \sim 1.5P1 \times \sqrt{(v/3.5)}$$

where P1 is an optimum recording power in recording at a linear velocity of 3.5 (m/sec)

provided that the oxonol dyes represented by the formulae [0091] and [0104] are excluded.

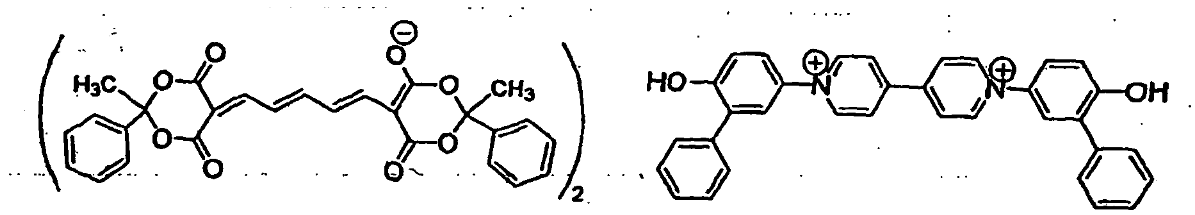

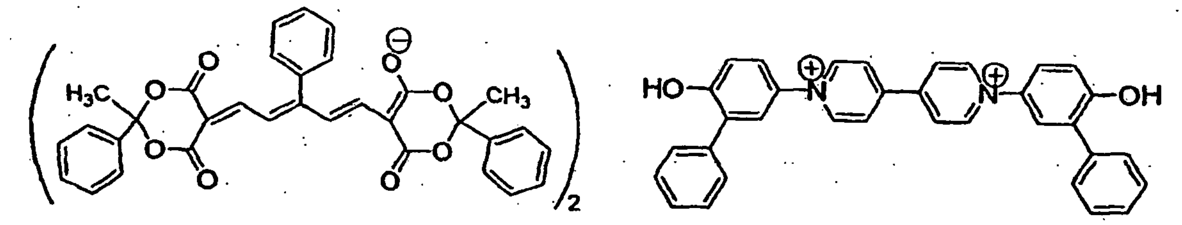

2. The optical recording method according to claim 1, wherein the oxonol dye is represented by formula (I):

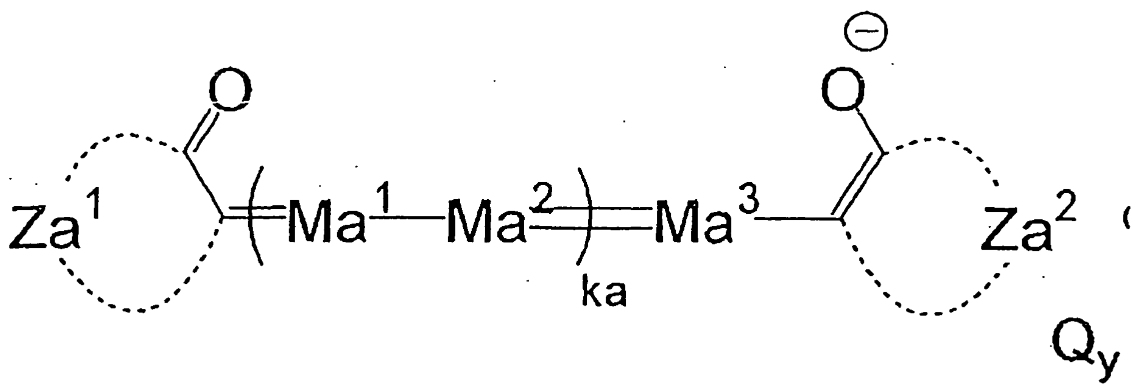

(I)

wherein $Za^1$ and $Za^2$ each independently represents an atomic group necessary to form an acidic nucleus; $Ma^1$, $Ma^2$ and $Ma^3$ each independently represents a substituted or unsubstituted methine group; ka represents an integer of 0 to 3; when ka is 2 or 3, $Ma^1$s and $Ma^2$s may be the same or different, respectively; Q represents an ion neutralizing charge; and y represents a number necessary for neutralization.

3. The optical recording method according to claim 2, wherein the ion represented by Q is represented by formula (II)

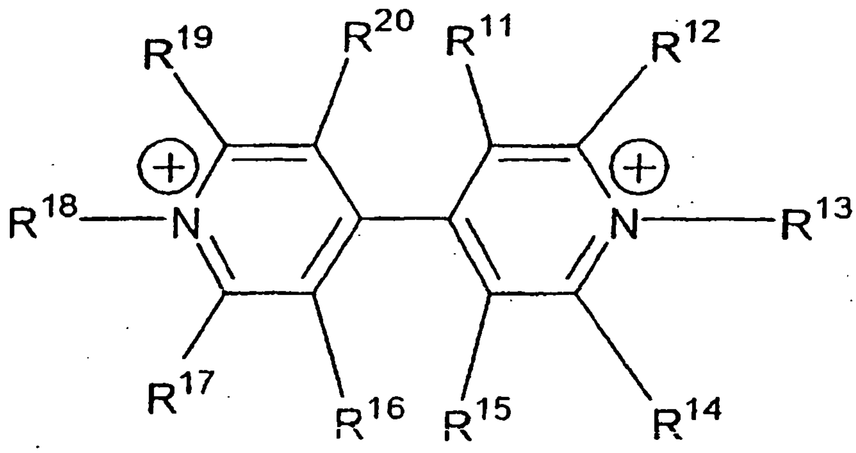

(II)

wherein $R^{11}$, $R^{12}$, $R^{14}$, $R^{15}$, $R^{16}$, $R^{17}$, $R^{19}$, and $R^{20}$ each independently represents a hydrogen atom or a substituent; and $R^{13}$ and $R^{18}$ each independently represents a substituent.

**4.** The optical recording method according to claim 1 wherein the oxonol compound is represented by formula (III):

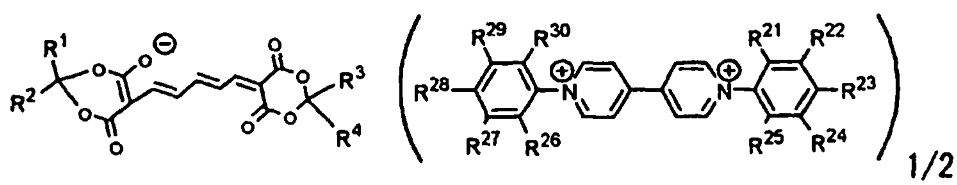

wherein $R^1$, $R^2$, $R^3$, and $R^4$ each independently represents a substituted or unsubstituted alkyl group, a substituted or unsubstituted aryl group, or a substituted or unsubstituted heterocyclic group; $R^1$ and $R^2$ may be taken together to form a ring; $R^3$ and $R^4$ may be taken together to form a ring; $R^{21}$, $R^{22}$, $R^{23}$, $R^{24}$, $R^{25}$, $R^{26}$, $R^{27}$, $R^{28}$, $R^{29}$, and $R^{30}$ each independently represent a hydrogen atom or a substituent; and any adjacent two of $R^{21}$, $R^{22}$, $R^{23}$, $R^{24}$, $R^{25}$ $R^{26}$, $R^{27}$, $R^{28}$, $R^{29}$, and $R^{30}$ may be taken together to form a ring.

**5.** The optical recording method according to claim 4, wherein $R^{21}$, $R^{22}$, $R^{23}$, $R^{24}$, $R^{25}$, $R^{26}$, $R^{27}$, $R^{28}$, $R^{29}$, and $R^{30}$ each independently represent a hydrogen atom, a hydroxyl group, a cyano group, a halogen atom, a substituted or unsubstituted aryl group or a substituted or unsubstituted alkyl group.

**6.** The optical recording method according to claim 5, wherein $R^{23}$ and $R^{28}$ each represent a hydroxyl group and $R^{22}$ and $R^{27}$ each represent a substituted or unsubstituted phenyl group.

**7.** The optical recording method according to any one of claims 1 to 6, wherein the optical recording medium has a structure selected from:

(1) a structure in which a first laminate comprising a transparent disk substrate with a diameter of from 117 to 123 mm or from 77 to 83 mm and a thickness of from 0.5 to 0.7 mm having a pregroove formed thereon at a track pitch of from 0.6 to 0.9 $\mu$m and a recording layer containing a dye formed on a pregrooved side of the substrate is joined with a second laminate having same dimension and structure as the first laminate with the recording layer of the first laminate and the recording layer of the second laminate facing inside to have a total thickness of from 1.0 to 1.4 mm; and
(2) a structure in which the first laminate is joined with a protective disk substrate with the recording layer facing the protective disk substrate to have a total thickness of from 1.0 to 1.4 mm.

## Patentansprüche

1. Optisches Aufzeichnungsverfahren, umfassend das Aufzeichnen eines optischen Aufzeichnungsmediums, das ein transparentes Substrat, eine Aufzeichnungsschicht, die einen Oxonolfarbstoff enthält, und eine Reflexionsschicht umfasst, mit einem Laserstrahl, der eine Wellenlänge von 600 bis 700 nm besitzt, bei einer linearen Geschwindigkeit v (m/sec) mit einer optimalen Aufzeichnungsleistung von mindestens 25 mW, wobei die optimale Aufzeichnungsleistung als eine Aufzeichnungsleistung (Po) definiert ist, bei der eine Schwankung beim Aufzeichnen von 8/16 Modulationssignalen am geringsten ist und die durch die Gleichung:

$$Po = P1 \times \sqrt{(v/3.5)} \sim 1.5P1 \times \sqrt{(v/3.5)}$$

dargestellt ist,
wobei P1 eine optimale Aufzeichnungsleistung beim Aufzeichnen bei einer linearen Geschwindigkeit von 3,5 (m/s) ist, mit der Maßgabe, dass die Oxonolfarbstoffe, die durch die Formeln [0091] und [0104] dargestellt sind, ausgeschlossen sind.

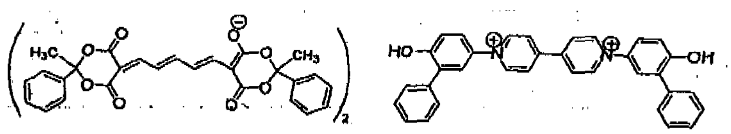

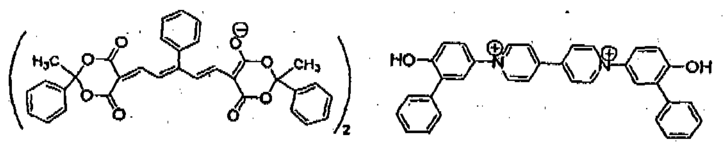

2. Das optische Aufzeichnungsverfahren gemäß Anspruch 1, wobei der Oxonolfarbstoff durch Formel (I) dargestellt ist:

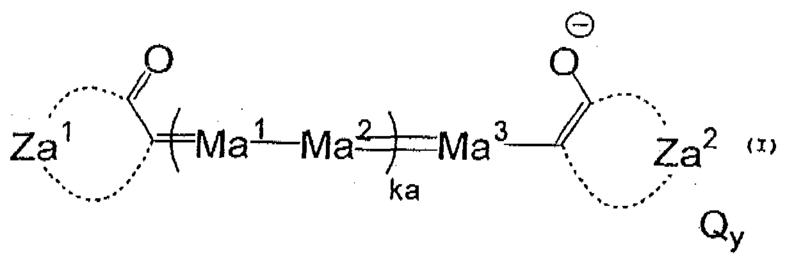

wobei $Za^1$ und $Za^2$ jeweils unabhängig voneinander eine atomare Gruppe darstellen, die notwendig ist um einen sauren Nukleus zu bilden; wobei $Ma^1$, $Ma^2$ und $Ma^3$ jewells unabhängig voneinander eine substituierte oder unsubstituierte Methingruppe darstellen; wobei ka eine ganze Zahl von 0 bis 3 darstellt; wobei, wenn ka 2 oder 3 ist, die $Ma^1$s und $Ma^2$S jeweils gleich oder verschieden sein können, wobei Q ein die Ladung neutralisierendes Ion darstellt; und wobei y eine Zahl darstellt, die für die Neutralisation nötig ist.

3. Das optische Aufzeichnungsverfahren gemäß Anspruch 2, wobei das Ion, das durch Q dargestellt ist, durch Formel (II) dargestellt ist

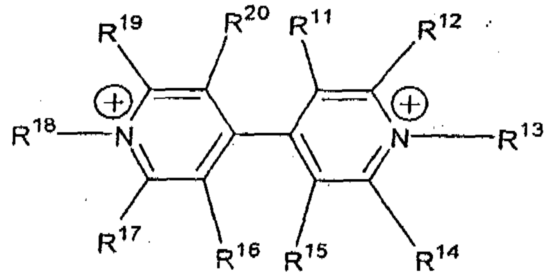

(II)

wobei $R^{11}$, $R^{12}$, $R^{14}$, $R^{15}$, $R^{16}$, $R^{17}$, $R^{19}$ und $R^{20}$ jeweils unabhängig voneinander ein Wasserstoffatom oder einen Substituenten darstellen; und wobei $R^{13}$ und $R^{18}$ jeweils unabhängig voneinander einen Substituenten darstellen.

**4.** Das optische Aufzeichnungsverfahren gemäß Anspruch 1, wobei die Oxonolverbindung durch Formel (III) dargestallt ist:

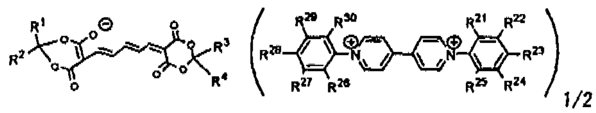

wobei $R^1$, $R^2$, $R^3$ und $R^4$ jeweils unabhängig voneinander eine substituierte oder unsubstituierte Alkylgruppe, eine substituierte oder unsubstituierte Arylguppe, oder eine substituierte oder unsubstituierte heterocyclische Gruppe darstellen; wobei $R^1$ und $R^2$ zusammengenommen werden können um einen Ring zu bilden; wobei $R^3$ und $R^4$ zusammengenommen werden können um einen Ring zu bilden; wobei $R^{21}$, $R^{22}$, $R^{23}$, $R^{24}$, $R^{25}$, $R^{26}$, $R^{27}$, $R^{28}$, $R^{29}$ und $R^{30}$ jeweils unabhängig voneinander ein Wasserstoffatom oder einen Substituenten darstellen; und wobei alle zwei benachbarten von $R^{21}$, $R^{22}$, $R^{23}$, $R^{24}$, $R^{28}$, $R^{28}$, $R^{27}$, $R^{28}$, $R^{29}$ und $R^{30}$ zusammengenommen werden können um einen Ring zu bilden.

**5.** Das optische Aufzeichnungsverfahren gemäß Anspruch 4, wobei $R^{21}$, $R^{22}$, $R^{23}$, $R^{24}$, $R^{25}$, $R^{26}$, $R^{27}$, $R^{28}$, $R^{29}$ und $R^{30}$ jeweils unabhängig voneinander ein Wasserstoffatom, eine Hydroxylgruppe, eine Cyanogruppe, ein Halogenatom, eine substituierte oder unsubstituierte Arylgruppe oder eine substituierte oder unsubstituierte Alkylgruppe darstellen.

**6.** Das optische Aufzeichnungsverfahren gemäß Anspruch 5, wobei $R^{23}$ und $R^{28}$ jeweils eine Hydroxylgruppe und jeder von $R^{22}$ und $R^{27}$ eine substituierte oder unsubstituierte Phenylgruppe darstellen.

**7.** Das optische Aufzeichnungsverfahren gemäß einem der Ansprüche 1 bis 6, wobei das optische Aufzeichnungsmedium eine Struktur besitzt, die ausgewählt ist von:

(1) einer Struktur, in der ein erstes Laminat, umfassend ein transparentes Disksubstrat mit einem Durchmesser von 117 bis 123 mm oder von 77 bis 83 mm und einer Dicke von 0,5 bis 0,7 mm, das einen Pregroove besitzt, der darauf bei einem Spurenabstand von 0,6 bis 0,9 $\mu$m gebildet ist, und eine Aufzeichnungsschicht, die einen Farbstoff enthält und die auf einer einen Pregroove enthaltenden Seite des Substrats gebildet ist, mit einem zweiten Laminat verbunden ist, das die gleiche Dimension und Struktur wie das erste Laminat besitzt, wobei die Aufzeichnungsschicht des ersten Laminats und die Aufzeichnungsschicht des zweiten Laminats nach innen zeigen, so dass eine Gesamtdicke von 1,0 bis 1,4 mm resultiert; und
(2) einer Struktur, in der das erste Laminat mit einem schützenden Disksubstrat verbunden ist, wobei die Aufzeichnungsschicht in Richtung des schützenden Disksubstrats zeigt, so dass eine Gesamtdicke von 1,0 bis 1,4 mm resultiert.

## Revendications

1. Procédé d'enregistrement optique comprenant l'enregistrement d'un support d'enregistrement optique comprenant un substrat transparent, une couche d'enregistrement contenant un colorant d'oxonol et une couche réflective avec un faisceau laser ayant une longueur d'onde de 600 à 700 nm à une vitesse linéaire v (m/s) avec une puissance d'enregistrement optimale d'au moins 25 mW, la puissance d'enregistrement optimale étant définie comme étant une puissance d'enregistrement (Po) à laquelle une fluctuation dans l'enregistrement de signaux de modulation 8/16 est la plus faible et représentée par l'équation :

$$Po = P1 \times \sqrt{(v/3.5)} \sim 1.5P1 \times \sqrt{(v/3.5)}$$

où P1 est une puissance d'enregistrement optimale dans l'enregistrement à une vitesse linéaire de 3,5 (m/s), à condition que les colorants d'oxonol représentés par les formules [0091] et [0104] soient exclus.

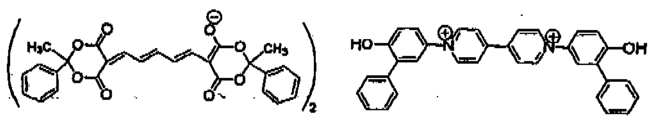

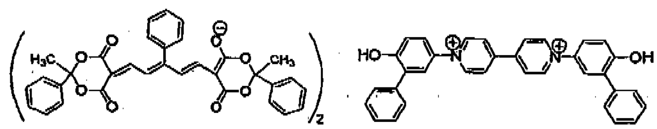

2. Procédé d'enregistrement optique selon la revendication 1, dans lequel le colorant d'oxonol est représenté par la formule (I) :

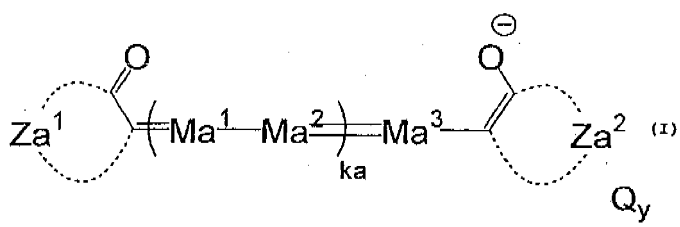 (I)

dans laquelle $Za^1$ et $Za^2$ représentent chacun indépendamment un groupe atomique nécessaire pour former un noyau acide ; $Ma^1$, $Ma^2$ et $Ma^3$ représentent chacun indépendamment un groupe méthine substitué ou non substitué ; ka représente un nombre entier de 0 à 3 ; lorsque ka est égal à 2 ou à 3, les Ma1 et Ma2 peuvent être identiques ou différents respectivement ; Q représente une charge neutralisant un ion ; et y représente un nombre nécessaire pour la neutralisation.

3. Procédé d'enregistrement optique selon la revendication 2, dans lequel l'ion représenté par Q est représenté par la formule (II) :

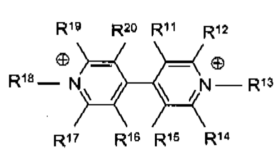 (II)

dans laquelle $R^{11}$, $R^{12}$, $R^{14}$, $R^{15}$, $R^{16}$, $R^{17}$, $R^{19}$ et $R^{20}$ représentent chacun indépendamment un atome d'hydrogène ou un substituant ; et R13 et R18 représentent chacun indépendamment un substituant.

4. Procédé d'enregistrement optique selon la revendication 1, dans lequel le composé d'oxonol est représenté par la formule (III) :

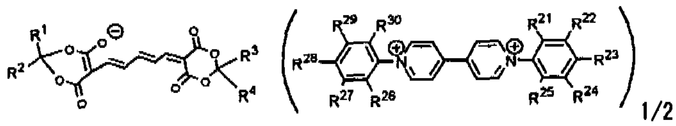

dans laquelle $R^1$, $R^2$, $R^3$ et $R^4$ représentent chacun indépendamment un groupe alkyle substitué ou non substitué, un groupe aryle substitué ou non substitué, un groupe hétérocyclique substitué ou non substitué ; $R^1$ et $R^2$ peuvent être pris ensemble pour former un noyau ; $R^3$ et $R^4$ peuvent être pris ensemble pour former un noyau ; $R^{21}$, $R^{22}$, $R^{23}$, $R^{24}$, $R^{25}$, $R^{26}$, $R^{27}$, $R^{28}$, $R^{29}$ et $R^{30}$ représentent chacun indépendamment un atome d'hydrogène ou un substituant ; et deux quelconques adjacents de $R^{21}$, $R^{22}$, $R^{23}$, $R^{24}$, $R^{25}$, $R^{26}$, $R^{27}$, $R^{28}$, $R^{29}$ et $R^{30}$ peuvent être pris ensemble pour former un noyau.

5. Procédé d'enregistrement optique selon la revendication 4, dans lequel $R^{21}$, $R^{22}$, $R^{23}$, $R^{24}$, $R^{25}$, $R^{26}$, $R^{27}$, $R^{28}$, $R^{29}$ et $R^{30}$ représentent chacun indépendamment un atome d'hydrogène, un groupe hydroxyle, un groupe cyano, un atome d'halogène, un groupe aryle substitué ou non substitué ou un groupe alkyle substitué ou non substitué.

6. Procédé d'enregistrement optique selon la revendication 5, dans lequel $R^{23}$ et $R^{28}$ représentent chacun un groupe hydroxyle et $R^{22}$ et $R^{27}$ représentent chacun un groupe phényle substitué ou non substitué.

7. Procédé d'enregistrement optique selon l'une quelconque des revendications 1 à 6, dans lequel le support d'enregistrement optique présente une structure choisie parmi :

(1) une structure dans laquelle un premier stratifié comprenant un substrat de disque transparent avec un diamètre de 117 à 123 mm ou de 77 à 83 mm et une épaisseur de 0,5 à 0,7 mm présentant une prérainure formée sur son dessus à un entraxe de pistes de 0,6 à 0,9 μm et une couche d'enregistrement contenant un colorant formé sur un côté pré-rainuré du substrat est joint à un second stratifié présentant les mêmes dimension et structure que le premier stratifié avec la couche d'enregistrement du premier stratifié et la couche d'enregistrement du second stratifié se faisant face vers l'intérieur pour présenter une épaisseur totale de 1,0 à 1,4 mm ; et
(2) une structure dans laquelle le premier stratifié est joint à un substrat de disque protecteur avec la couche d'enregistrement faisant face au substrat de disque protecteur pour présenter une épaisseur totale de 1,0 à 1,4 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63209995 A
- JP 2000052658 A
- JP 2002249674 A
- JP 2002059652 A
- JP 3922069 B
- JP 433504 B
- JP 52038056 B
- JP 54038129 B
- JP 55010059 B
- JP 58035544 B
- JP 49099620 A
- JP 52092716 A
- JP 59016834 A
- JP 63316853 A
- JP 6440827 A
- GB 1133986 A
- US 3247127 A
- US 4042397 A
- US 4181225 A
- US 5213956 A
- US 5260179 A
- JP 10309871 A
- JP 3224793 A
- JP 2300287 A
- JP 2300288 A
- JP 10151861 A


### Non-patent literature cited in the description


- **Tang et al.** *Proceedings of SPIE,* April 2003, vol. 5060
- **F.M. Harmer.** Heterocyclic Compounds-Cyanine Dyes and Related Compounds. John & Wiley & Sons, 1964
- The Theory of the Photographic Process. MacMillan, 1977, 198